# EUROPÄISCHE PATENTSCHRIFT

(11) **EP 0 545 281 B1**
(45) Veröffentlichungstag und Bekanntmachung des Hinweises auf die Patenterteilung: **24.06.1998**
(21) Anmeldenummer: 92120171.1
(22) Anmeldetag: 26.11.1992
(51) Int. Cl.: C10J 3/48, C01B 3/36

(54) **Brenner zur Herstellung von Synthesegas**
Burner for production of synthesis gas
Brûleur pour la production de gaz de synthèse

(30) Priorität: 05.12.1991 DE 4140063
(43) Veröffentlichungstag der Anmeldung: 09.06.1993
(73) Patentinhaber: Celanese GmbH, 60439 Frankfurt (DE)
(72) Erfinder: Gerhardus, Ulrich, Dipl.-Ing., W-4200 Oberhausen (DE); Schleper, Bernard, Dipl.-Ing., W-4200 Oberhausen (DE)

(56) Entgegenhaltungen:
- EP-A- 0 312 133
- DE-A- 3 628 865
- US-A- 4 364 744
- PATENT ABSTRACTS OF JAPAN vol. 15, no. 481 (M-1187)

## Beschreibung

Die vorliegende Erfindung betrifft einen Brenner zur Herstellung von Synthesegas durch partielle Oxidation kohlenstoffhaltiger Brennstoffe mit verbesserten Eigenschaften.

Die Herstellung von Synthesegas erfolgt üblicherweise durch partielle Oxidation kohlenstoffhaltigen Materials mit Sauerstoff oder einem Sauerstoff enthaltenden Gas, beispielsweise Luft unter erhöhtem Druck und vergleichsweise hohen Temperaturen von 1000 bis 1600°C. Als kohlenstoffhaltiges Material werden Kohlenwasserstoffe, Aufschlämmungen von festen kohlenstoffhaltigen Brennstoffen in Kohlenwasserstoffen oder Aufschlämmungen fester kohlenstoffhaltiger Brennstoffe in Wasser wie Kohle-Wasser-Suspensionen verwendet.

Die EP 0 095 103 B1 beschreibt ein Verfahren und einen Brenner zur Herstellung von Synthesegas. Das Verfahren wird mit Hilfe eines aus drei konzentrisch angeordneten Rohren bestehenden Brennersystems, wobei drei Stoffströme der Umsetzung zugeleitet werden, durchgeführt. Der Sauerstoff oder der sauerstoffhaltiges Gas enthaltende Stoffstrom wird durch die innere und die äußere Zone des Brenners geführt und das kohlenstoffhaltige Material, nämlich eine Kohle-Wasser-Suspension, durch den aus dem inneren und mittlerem Rohr gebildeten Ringraum geleitet. Auf den inneren Stoffstrom entfallen 1 bis 20 % der insgesamt für die partielle Oxidation erforderlichen Sauerstoffmenge, der verbleibende Sauerstoffbedarf wird durch den äußeren Stoffstrom, der durch den aus dem mittleren und äußeren Rohr gebildeten Ringraum in die Reaktion gelangt, gedeckt.

Der Brenner weist drei konzentrisch angeordnete Rohre, die jeweils ein sich konisch verjüngendes Ende besitzen, sowie eine Kühlkammer im Bereich des Brennerausganges auf.

Die den mittleren Stoffstrom bildende Kohle-Wasser-Suspension wird dem unter einem Druck von 1 bis 20 MPa stehenden Reaktor mit einer Geschwindigkeit von 1 bis 25, insbesondere 2 bis 15 m/sec zugeführt, während der innere wie auch der äußere Gasstrom mit einer Geschwindigkeit von 50 bis 300, insbesondere 80 bis 200 m/sec in die Reaktionszone gelangen.

Durch die konische Verjüngungen der konzentrisch angeordneten Rohre wird bewirkt, daß die drei Stoffströme unter einem spitzen Winkel aufeinandertreffen. Dadurch wird erreicht, daß der Kohle-Wasser-Suspensionsstrom nach Verlassen des Endes der konischen Verjüngung durch den inneren Gasstrom auseinandergedrückt bzw. aufgerissen wird. Somit unterliegt der Suspensionsstrom einer horizontalen Ablenkung und passiert die Reaktionszone nicht im freien Fall. Demzufolge vergrößert sich die mittlere Aufenthaltszeit der einzelnen Kohle-Wasser-Tröpfchen und der Umsetzungsgrad wird gesteigert.

Gleichzeitig trifft der äußere Gasstrom auf den durch den inneren Gasstrom aufgeweiteten Strom der Kohle-Wasser-Suspension und erzielt eine weitere Vermischung von Gas und Suspension, so daß eine Zone gleichmäßiger Verteilung von Gas bzw. Sauerstoff und feinsten Suspensionströpfchen entsteht. Dies ist eine wesentliche Voraussetzung, die Kohle-Wasser-Suspension in möglichst hohem Maße umzusetzen.

Es hat sich herausgestellt, daß für den Einsatz von Kohlenwasserstoff enthaltenden Brennstoffen ähnliche Bedingungen, wie zuvor im Zusammenhang mit Kohle-Wasser-Suspensionen näher beschrieben, von Vorteil sind.

Die partielle Oxidation des kohlenstoffhaltigen Brennstoffes, insbesondere eines Kohlenwasserstoffs, führt zu einem chemisch sehr aggressiven Gemisch, das etwa 30 bis 50 Gew.-% Kohlenmonoxid, etwa 30 bis 50 Gew.-% Wasserstoff, etwa 3 bis 20 Gew.-% CO₂ und nichtumgesetzten Wasserdampf enthält und in kleineren Mengen neben anderen Stoffen noch Schwefel, Eisen, Vanadium, Nickel, Natrium Chlor und Calcium aufweist.

Die stoffliche Zusammensetzung und die Ascheanteile des entstehenden Vergasungsproduktes sind einerseits von der Art des Brennstoffs, andererseits von den Verfahrensbedingungen, wie der Sauerstoffmenge, der eingestellten Temperatur und dem Druck abhängig. Üblicherweise wird die partielle Oxidation kohlenwasserstoffhaltiger Brennstoffe bei etwa 1000 bis 1600, insbesondere bei 1200 bis 1600°C und Drücken von 1,0 bis 15,0, insbesondere 2,0 bis 10, bevorzugt 3,0 bis 5,0 MPa durchgeführt. Der im Synthesegas enthaltene Wasserstoff resultiert aus der Umsetzung von Wasser, das der partiellen Oxidation in flüssigem Zustand und/oder in Form von Wasserdampf zugeführt wird. Das für die Umsetzung benötigte Wasser kann als ein separater Stoffstrom oder im Gemisch mit anderen Stoffströmen, beispielsweise mit dem Kohlenwasserstoff, dem Sauerstoff oder dem Sauerstoff enthaltenden Gasstrom vermischt zum Einsatz gelangen. Es ist auch möglich, das Wasser sowohl im flüssigen Zustand als auch in Dampfform auf mehrere Stoffströme zu verteilen.

Gleiches trifft auch für die Zufuhr des Kohlenwasserstoff enthaltenden Brennstoffs und des Sauerstoff oder ein sauerstoffhaltiges Gasgemisch enthaltenden Stoffstromes zu. Auch diese Stoffströme können entweder als separater Strom oder verteilt auf mehrere Ströme der Umsetzung zugeführt werden.

Als Folge der in der partiellen Oxidation herrschenden Bedingungen ist der Brenner in erheblichem Maße einer Reihe von physikalischen und chemischen Belastungen ausgesetzt.

Aufgrund der hohen Austrittsgeschwindigkeit der Stoffströme, insbesondere der Gasströme, treten Vibrationen auf, die eine starke mechanische Beanspruchung des Brenners nach sich ziehen.

Bedingt durch die Zusammensetzung des aus der partiellen Oxidation resultierenden sehr reaktiven Gasgemisches, in Verbindung mit den hohen Temperaturen, ist der Brenner in hohem Maße auch einem chemischen Angriff ausgeliefert. Daneben führen auch Schlackepartikel, die sich beispielsweise in schmelzflüssigem Zustand auf dem Brenner ablagern, durch chemische Reaktionen und Erosion zu einer Belastung des Brenners, insbesondere im Bereich der Stirnseite des Brenners.

Daneben ist der Brenner in besonderem Maße einer thermischen Beanspruchung ausgesetzt, die durch die hohe Intensität der bei der Vergasung auftretenden Wärmestrahlung hervorgerufen wird. Diese thermische Belastung fällt bei der Vergasung Kohlenwasserstoffe enthaltender Brennstoffe höher als bei der entsprechenden Umsetzung einer Kohle-Wasser-Suspension aus. Hierfür ist zum einen die höhere Vergasungstemperatur und zum anderen der kürzere Abstand des Brenners zu der Zone der Vergasung verantwortlich. Die höhere Temperatur ist eine Folge der leichteren Brennbarkeit des Kohlenwasserstoffes und der verringerte Abstand resultiert aus einem früheren Zünden des Kohlenwasserstoffes, bedingt durch seine im Vergleich zu einer Kohle-Wasser-Suspension erheblich niedrigere Zündtemperatur.

Der Brenner ist in Dauerbetrieb nicht nur Vibrationen und einem chemischen Angriff des sehr reaktionsfreudigen Synthesegases, sondern auch einer Erosion durch Schlacketeilchen und einer hohen thermischen Belastung ausgesetzt. Obwohl für den in den Vergasungsreaktor hineinragenden Teil des Brenners hochwertige Werkstoffe, insbesondere hochlegierte Edelstähle wie Incoloy und Hastelloy verwendet werden, besitzt der Brenner eine nur sehr begrenzte Lebenserwartung von etwa drei bis vier Monaten. Dies ist für den Betrieb einer modernen Anlage zur Herstellung von Synthesegas von erheblichem Nachteil, da ein Austausch des Brenners nur bei abgeschalteter Anlage vorgenommen werden kann. Ein Abschalten der Synthesegasanlage zieht jedoch ein Abkühlen und Entspannen der unter Druck stehenden Apparate nach sich. Nach Ersatz des defekten Brenners durch einen neuen muß die Anlage zunächst wieder aufgeheizt und unter Druck gesetzt werden, ehe die Produktion von Synthesegas wieder aufgenommen werden kann.

Ein Brenner mit den Merkmalen gemäß dem Oberbegriff des Anspruchs 1 ist durch die US-A-4,364,744 bzw. die DE-A-3 628 865 bekannt. Gemäß ersterer ist im zylindrischen Auslaßbereich des Brenners ein keramischer Einsatz aus Wolfram- oder Siliciumcarbid angeordnet, während gemäß letzterer an der der Oxidationszone zugewandten Stirnseite des Brenners eine feuerfeste Verkleidung vorgesehen ist.

Es besteht daher die Aufgabe, einen Brenner mit erheblich gesteigerter Lebenserwartung bereitzustellen.

Gelöst wird diese Aufgabe durch einen Brenner zur Herstellung von Synthesegas durch partielle Oxidation kohlenstoffhaltiger Brennstoffe, enthaltend drei oder mehr zueinander konzentrisch angeordnete Rohre, die gegebenenfalls am Brennerausgang eine konische Verjüngung aufweisen, und eine den Brennerausgang umgebende, in der Stirnseite des Brenners angeordnete Kühlkammer. Er ist dadurch gekennzeichnet, daß die der Zone der partiellen Oxidation zugewandte Stirnseite mit einer aus einzelnen, nebeneinander angeordneten Keramikplättchen zusammengesetzten Schicht verkleidet ist.

Der erfindungsgemäße Brenner enthält mindestens drei, insbesondere drei bis sechs, bevorzugt drei bis vier, besonders bevorzugt drei zueinander konzentrisch angeordnete Rohre. Die gegebenenfalls am Brennerausgang der konzentrisch zueinander angeordneten Rohre vorhandenen konischen Verjüngungen bilden die Austrittsöffnungen für die einzelnen Stoffströme, wobei das innerste Rohr eine kreisförmige Austrittsöffnung und die übrigen konzentrisch zueinander angeordneten Rohre entsprechende ringförmige Austrittsöffnungen bilden.

Der erfindungsgemäße Brenner eignet sich für die partielle Oxidation sowohl von Kohle-Wasser-Suspensionen als auch von Kohlenwasserstoffen oder Kohlenwasserstoff enthaltenden Brennstoffen. Er hat sich besonders bei der Herstellung von Synthesegas durch partielle Oxidation von Kohlenwasserstoffen oder Kohlenwasserstoff enthaltenden Brennstoffen bewährt.

Die der Vergasungszone zugewandte Stirnseite des Brenners ist mit einzelnen Keramikplättchen, die flächendeckend, nach Art eines Mosaiks, nebeneinander angeordnet sind, verkleidet. Die einzelnen Keramikplättchen sind mittels eines Keramikklebers sowohl untereinander als auch mit der Stirnseite des Brenners verbunden. Der Keramikkleber bildet auf der Stirnseite des Brenners eine Schicht, in die die einzelnen Keramikplättchen eingebettet werden.

Nach einer besonderen Ausführungsform weist das einzelne Keramikplättchen eine oder mehrere Ausbuchtungen und die Stirnseite des Brenners entsprechende Einbuchtungen zum Aufnehmen der Ausbuchtungen auf. Durch das Einfügen der an der Unterseite der Keramikplättchen befindlichen Ausbuchtungen in die passend geformten Einbuchtungen wird eine zusätzliche Verbindung von Keramikplättchen und Stirnseite geschaffen und zugleich die mechanische Belastbarkeit erhöht. Besonders bewährt hat es sich, die Ausbuchtungen und Einbuchtungen schwalbenschwanzförmig zu gestalten, es sind jedoch auch andere Formen wie Stifte oder Noppen geeignet.

Es ist möglich, die Keramikplättchen nebeneinander in beliebiger Anordnung auf der Stirnseite des Brenners flächendeckend zu verteilen. Besonders günstig ist es, die einzelnen Keramikplättchen in einer Weise anzuordnen, daß sie jeweils die Form eines Ringes bilden. Mehrere derartiger, einander konzentrisch umgebender Ringe bedecken die Stirnseite des Brenners.

Zweckmäßigerweise ordnet man die Keramikplättchen der einzelnen Ringe gegeneinander versetzt an. Auf diese Weise vermeidet man die Bildung langer, durchgehender Fugen, die sich auf die mechanische Stabilität der Verkleidung nachteilig auswirken könnten.

Die einzelnen Keramikplättchen können eine beliebige Form besitzen. Sie können rund, quadratisch, rechteckig, rautenförmig, dreieckig, viereckig sein oder die Form eines regelmäßigen oder unregelmäßigen Vielecks aufweisen. Es können Keramikplättchen gleicher oder unterschiedlicher Form nebeneinander angeordnet werden.

Besonders geeignet sind Keramikplättchen, die die Form eines Trapezes oder eines Ringsegmentes aufweisen. Diese Formgebung erleichtert die Anordnung der einzelnen Keramikplättchen zu einem Ring.

Das einzelne Keramikplättchen soll eine Schichtdicke von 1 bis 10, insbesondere 2 bis 5 mm, gerechnet jeweils ohne die als Verankerung in der Stirnseite des Brenners dienende Ausbuchtung, besitzen. Die Seiten des einzelnen Keramikplättchen sollten nicht zu lang gewählt werden. Eine Länge der einzelnen Seiten bis zu 50 mm dürfte ausreichend bemessen sein. In den meisten Fällen empfiehlt es sich, Keramikplättchen zu verwenden, die je Seite eine Länge von 5 bis 35, insbesondere 6 bis 30, bevorzugt 8 bis 20 mm aufweisen.

Das einzelne Keramikplättchen besteht aus einer gegenüber den in der Vergasungsreaktion auftretenden Bedingungen beständigen Keramik. Geeignete Materialien sind Oxidkeramiken, die beispielsweise Al₂O₃, Cr₂O₃, MgO ZrO₂ und/oder SiO₂ enthalten, oder Nichtoxidkeramiken, die beispielsweise Carbide und Nitride des Bors, Aluminiums oder Siliciums umfassen. Besonders geeignet ist Siliciumnitrid.

Auch der Keramikkleber muß gegenüber den in der Vergasungsreaktion auftretenden Bedingungen widerstandsfähig sein und eine dauerhafte, elastische Verbindung zwischen den einzelnen Keramikplättchen und der Stirnseite des Brenners gewährleisten.

Besonders bewährt hat sich ein Keramikkleber auf Basis eines Alumo-Silikates, der dem thermischen Dehnverhalten der Keramikplättchen angepaßt ist.

Die nachfolgenden Zeichnungen beschreiben die vorliegende Erfindung näher, ohne sie zu beschränken.

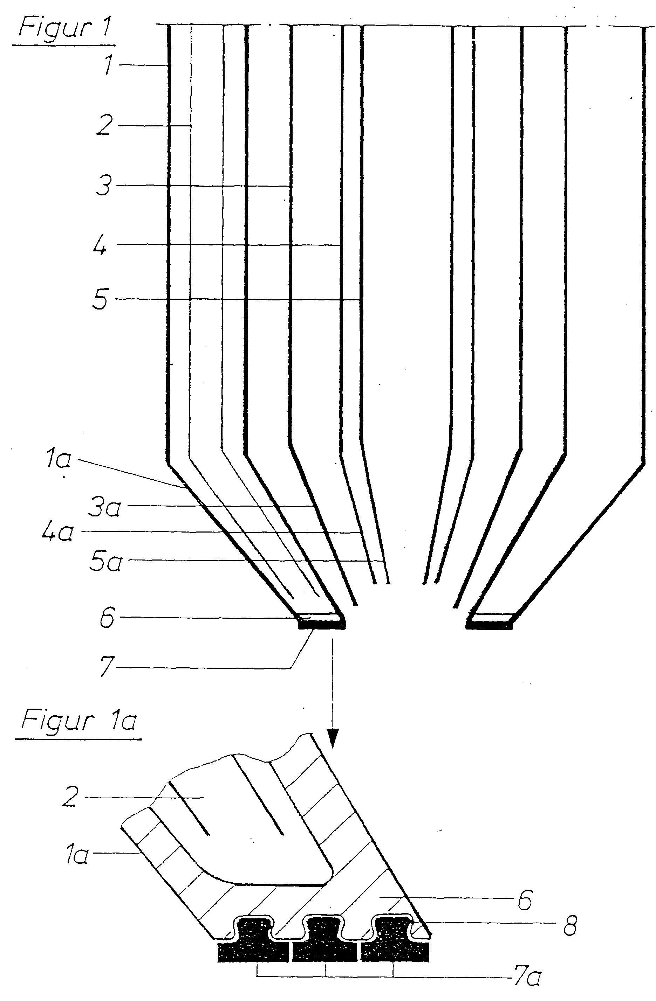

Figur 1 zeigt einen Längsschnitt durch den unteren, der Zone der Vergasung zugewandten Teil des erfindungsgemäßen Brenners. Der Brenner besteht aus einem äußeren Dopppelmantelrohr 1, das eine konische Verjüngung la und ein eingesetztes Rohr 2 zur Zufuhr eines Kühlmittels aufweist, und mehreren zueinander konzentrisch angeordneten inneren Rohren 3, 4 und 5, die entsprechende konische Verjüngungen 3a, 4a und 5a besitzen. Die einzelnen Stoffströme gelangen durch die Zwischenräume, die erstens von dem Doppelmantelrohr 1 und dem inneren Rohr 3, zweitens von dem inneren Rohr 3 und dem weiter innen liegenden Rohr 4 und drittens von dem weiter innen liegenden Rohr 4 und dem in der Mitte des Brenners angeordneten Rohr 5 gebildet werden. Ein weiterer Stoffstrom wird durch das Rohr 5 geführt. Die Stoffströme treten am Ende der durch die konischen Verjüngungen 1a, 3a, 4a und 5a gebildeten Ringöffnungen sowie durch die konische Verjüngung 5a des Rohres 5 aus.

Das Doppelmantelrohr 1 ist am Ende seiner konischen Verjüngung la geschlossen. Diese geschlossene Partie bildet die Stirnseite 6 des Brenners, die mit einer aus einzelnen, nebeneinander angeordneten Keramikplättchen zusammengesetzten Schicht 7 verkleidet ist. Durch das in das Doppelmantelrohr 1 eingesetzte Rohr 2 wird das Kühlmittel, vorzugsweise Wasser, eingeleitet. Dadurch fungiert das Doppelmantelrohr 1, insbesondere im Bereich seiner konischen Verjüngung 1a, als Kühlkammer.

Figur 1a zeigt im Längsschnitt, vergrößert dargestellt, ein Detail des Brenners. Hierin steht 1a für die konische Verjüngung des Doppelmantelrohres 1, die zusammen mit dem Kühlmittel führenden Rohr 2 eine Kühlkammer bildet, und 6 für die mit eine schwalbenschwanzförmige Ausbuchtung besitzenden Keramikplättchen 7a verkleidete Stirnseite. Die Keramik-plättchen sind sowohl untereinander als auch mit der Stirnseite 6 des Brenners mittels einer Schicht 8 eines Keramikklebers verbunden.

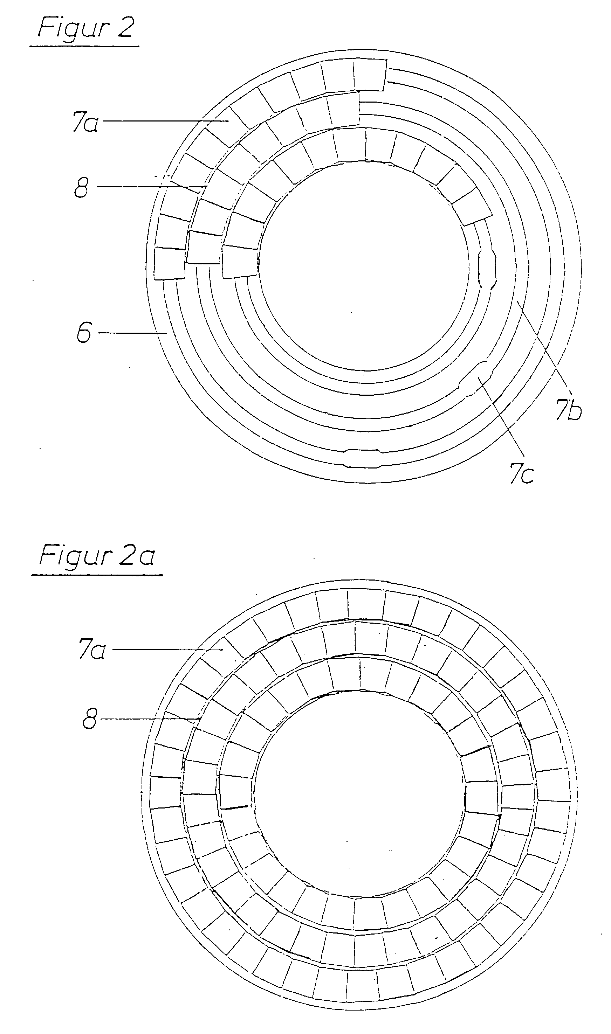

Figur 2 zeigt die teilweise mit Keramikplättchen 7a bedeckte Stirnseite 6 des Brenners in Aufsicht. Zur Vereinfachung der Darstellung sind die inneren Rohre 3, 4 und 5 nicht eingezeichnet.

Die ringförmige Stirnseite 6 weist drei schwalbenschwanzförmige Ringnuten 7b zur Aufnahme der schwalbenschwanzförmigen Ausbuchtungen der Keramikplättchen 7a auf. Jede Ringnut 7b besitzt eine erweiterte Öffnung 7c, die zum Einsetzen der schwalbenschwanzförmigen Ausbuchtung der Keramikplättchen 7a dient. Durch Verschieben des Keramikplättchens wird dessen schwalbenschwanzförmige Ausbuchtung in die Ringnut 7b eingeführt. Durch Aneinanderreihen der einzelnen Keramikplättchen bildet sich ein entsprechender Ring. Die schwalbenschwanzförmige Ausbuchtung des zuletzt einzufügenden Keramikplättchens wird zunächst in die erweiterte Öffnung 7c eingesetzt, wobei anschließend der gesamte, aus den einzelnen Keramikplättchen gebildete Ring, um die halbe Länge der erweiterten Öffnung 7c verschoben wird. Auf diese Weise wird sichergestellt, daß sich die beiden, zur erweiterten Öffnung 7c benachbarten Keramikplättchen zumindest zu einem Teil mit ihrer schwalbenschwanzförmigen Ausbuchtung 7a in der Ringnut 7b befinden. Zwischen den einzelnen Keramikplättchen befindet sich eine mit der Schicht 8 des Keramikklebers gefüllte Fuge.

Figur 2a zeigt die vollständig mit einzelnen, nebeneinander angeordneten Keramikplättchen 7a bedeckte Stirnseite 6 des Brenners in Aufsicht.

Die Keramikplättchen 7a weisen die Form eines Trapezes auf und sind derart aneinandergereiht, daß sie drei konzentrisch angeordnete Ringflächen ergeben. Zwischen den einzelnen Keramikplättchen befindet sich die mit der Schicht 8 des Keramikklebers gefüllte Fuge.

Wie in Figur 2 sind zur Vereinfachung der Darstellung die inneren Rohre 3, 4 und 5 nicht eingezeichnet.

## Patentansprüche

1. Brenner zur Herstellung von Synthesegas durch partielle Oxidation kohlenstoffhaltiger Brennstoffe, enthaltend drei oder mehr zueinander konzentrisch angeordnete Rohre, die gegebenenfalls am Brennerausgang eine konische Verjüngung aufweisen, und eine den Brennerausgang umgebende, in der Stirnseite des Brenners angeordnete Kühlkammer, dadurch gekennzeichnet, daß die der Zone der partiellen Oxidation zugewandte Stirnseite mit einer aus einzelnen, nebeneinander angeordneten Keramikplättchen zusammengesetzten Schicht verkleidet ist.

2. Brenner nach Anspruch 1, dadurch gekennzeichnet, daß die einzelnen Keramikplättchen mittels eines Keramikklebers untereinander und mit der Stirnseite des Brenners verbunden sind.

3. Brenner nach Anspruch 1 oder 2, dadurch gekennzeichnet, daß das einzelne Keramikplättchen eine oder mehrere Ausbuchtungen und die Stirnseite des Brenners entsprechende Einbuchtungen zum Aufnehmen der Ausbuchtungen aufweist.

4. Brenner nach Anspruch 3, dadurch gekennzeichnet, daß die Ausbuchtung und die entsprechende Einbuchtung schwalbenschwanzförmig ist.

5. Brenner nach einem oder mehreren der Ansprüche 1 bis 4, dadurch gekennzeichnet, daß die einzelnen Keramikplättchen nebeneinander, die Form eines Ringes bildend angeordnet werden.

6. Brenner nach einem oder mehreren der Ansprüche 1 bis 5, dadurch gekennzeichnet, daß das einzelne Keramikplättchen die Form eines Kreises, eines Trapezes oder eines Ringsegmentes, insbesondere eines Trapezes oder Ringsegments, besitzt.

7. Brenner nach einem oder mehreren der Ansprüche 1 bis 6, dadurch gekennzeichnet, daß das einzelne Keramik-plättchen eine Schichtdicke von 1 bis 10, insbesondere 2 bis 5 mm aufweist.

8. Brenner nach einem oder mehreren der Ansprüche 1 bis 7, dadurch gekennzeichnet, daß das einzelne Keramik-plättchen je Seite eine Länge von 5 bis 35, insbesondere 6 bis 30, bevorzugt 8 bis 20 mm aufweist.

9. Brenner nach einem oder mehreren der Ansprüche 1 bis 8, dadurch gekennzeichnet, daß das einzelne Keramik-plättchen aus einer Keramik auf Basis einer Oxidkeramik, die Al₂O₃, Cr₂O₃, MgO, ZrO₂ und/oder SiO₂ enthält, oder auf Basis einer Nichtoxidkeramik, die ein Carbid oder Nitrid des Bors, Aluminiums oder Siliciums enthält, insbesondere aus Siliciumnitrid, besteht.

10. Brenner nach einem oder mehreren der Ansprüche 2 bis 9, dadurch gekennzeichnet, daß der Keramikkleber ein hochtemperaturbetändiges Alumo-Silikat enthält.

## Claims

1. A burner for the production of synthesis gas by partial oxidation of carbon-containing fuels, containing three or more tubes arranged concentrically to each other, which may have a conical tapering at the burner outlet, and a cooling chamber, surrounding the burner outlet, arranged in the end of the burner, in which the end facing the partial oxidation zone is clad with a layer composed of individual, adjacently arranged ceramic platelets.

2. The burner as claimed in claim 1, wherein the individual ceramic platelets are bonded to each other and to the end of the burner by a ceramic adhesive.

3. The burner as claimed in claim 1 or 2, wherein the individual ceramic platelets have one or more bulges and the end of the burner has corresponding recesses to receive the bulges.

4. The burner as claimed in claim 3, wherein the bulge and the corresponding recess are dovetail-shaped.

5. The burner as claimed in one or more of claims 1 to 4, wherein the individual ceramic platelets are arranged next to each other forming the shape of a ring.

6. The burner as claimed in one or more of claims 1 to 5, wherein the individual ceramic platelet has the shape of cross, a trapezoid or a ring segment, in particular a trapezoid or ring segment.

7. The burner as claimed in one or more of claims 1 to 6, wherein the individual ceramic platelet has a layer thickness of 1 to 10, in particular 2 to 5 mm.

8. The burner as claimed in one or more of claims 1 to 7, wherein the individual ceramic platelet has a length on each side of 5 to 35, in particular 6 to 30, preferably 8 to 20 mm.

9. The burner as claimed in one or more of claims 1 to 8, wherein the individual ceramic platelet is composed of a ceramic based on an oxide ceramic, which contains Al₂O₃, Cr₂O₃, MgO, ZrO₂ and/or SiO₂, or is based on a non-oxide ceramic, which contains a carbide or nitride of boron, of aluminum or of silicon, in particular silicon nitride.

10. The burner as claimed in one or more of claims 2 to 9, wherein the ceramic adhesive contains a high temperature-resistant aluminosilicate.

## Revendications

1. Brûleur pour la préparation de gaz de synthèse par oxydation partielle de combustibles carbonés, contenant trois tuyaux ou plus disposés concentriquement les uns aux autres, lesquels présentent éventuellement à la sortie du brûleur une réduction conique et une chambre de refroidissement entourant la sortie du brûleur, disposée dans le côté frontal du brûleur, caractérisé en ce que la zone du côté frontal faisant face à l'oxydation partielle est garnie d'une couche constituée de plaquettes céramiques individuelles, disposées les unes à côté des autres.

2. Brûleur selon la revendication 1, caractérisé en ce que les plaquettes céramiques individuelles sont liées les unes aux autres et avec le côté frontal du brûleur à l'aide d'une colle pour céramique.

3. Brûleur selon la revendication 1 ou 2, caractérisé en ce que la plaquette céramique individuelle présente une ou plusieurs saillies et le côté frontal du brûleur présente des creux correspondants pour la prise des saillies.

4. Brûleur selon la revendication 3, caractérisé en ce que la saillie et le creux correspondant sont en forme de queue d'aronde.

5. Brûleur selon l'une ou plusieurs quelconques des revendications 1 à 4, caractérisé en ce que les plaquettes céramiques individuelles sont disposées les unes à côté des autres dans la forme d'un anneau.

6. Brûleur selon l'une ou plusieurs quelconques des revendications 1 à 5, caractérisé en ce que la plaquette céramique individuelle a la forme d'un cercle, d'un trapèze ou d'un segment d'anneau; en particulier d'un trapèze ou d'un segment d'anneau.

7. Brûleur selon l'une ou plusieurs quelconques des revendications 1 à 6, caractérisé en ce que la plaquette céramique individuelle présente une épaisseur de couche de 1 à 10, en particulier de 2 à 5 mm.

8. Brûleur selon l'une ou plusieurs quelconques des revendications 1 à 7, caractérisé en ce que la plaquette céramique individuelle présente par côté une longueur de 5 à 35, en particulier de 6 à 30, de préférence de 8 à 20 mm.

9. Brûleur selon l'une ou plusieurs quelconques des revendications 1 à 8, caractérisé en ce que la plaquette céramique individuelle est constituée d'une céramique à base d'une céramique de type oxyde qui contient Al₂O₃, Cr₂O₃, MgO, ZrO₂ et/ou SiO₂, ou à base d'une céramique de type non oxyde, qui contient un carbure ou un nitrure du bore, de l'aluminium ou du silicium, en particulier du nitrure de silicium.

10. Brûleur selon l'une ou plusieurs quelconques des revendications 2 9, caractérisé en ce que la colle pour céramique contient un aluminosilicate résistant aux températures élevées.
